# EUROPEAN PATENT SPECIFICATION

(11) **EP 0 524 466 B1**
(45) Date of publication and mention of the grant of the patent: **06.12.1995**
(21) Application number: 92111308.0
(22) Date of filing: 03.07.1992
(51) Int. Cl.: H02J 7/14, H02J 7/16

(54) **A control device for an alternating current generator of a vehicle**
Steuereinrichtung für einen Wechselstromgenerator eines Fahrzeuges
Dispositif de contrôle pour un générateur de courant alternatif d'un véhicule

(30) Priority: 18.07.1991 JP 177900/91
(43) Date of publication of application: 27.01.1993
(73) Proprietor: MITSUBISHI DENKI KABUSHIKI KAISHA, Tokyo (JP)
(72) Inventor: Mitsuharu, Morishita, c/o Mitsubishi Denki K.K., Himeji-shi, Hyogo-ken (JP)
(74) Representative: Lehn, Werner, Dipl.-Ing.

(56) References cited:
- EP-A- 0 081 891
- DE-A- 3 309 447
- FR-A- 2 420 874
- GB-A- 2 172 416
- JP-A-61 039 607

## Description

This invention relates to a control device for an alternating current generator of a vehicle particularly to a control device regulating the field current of an alternating current generator.

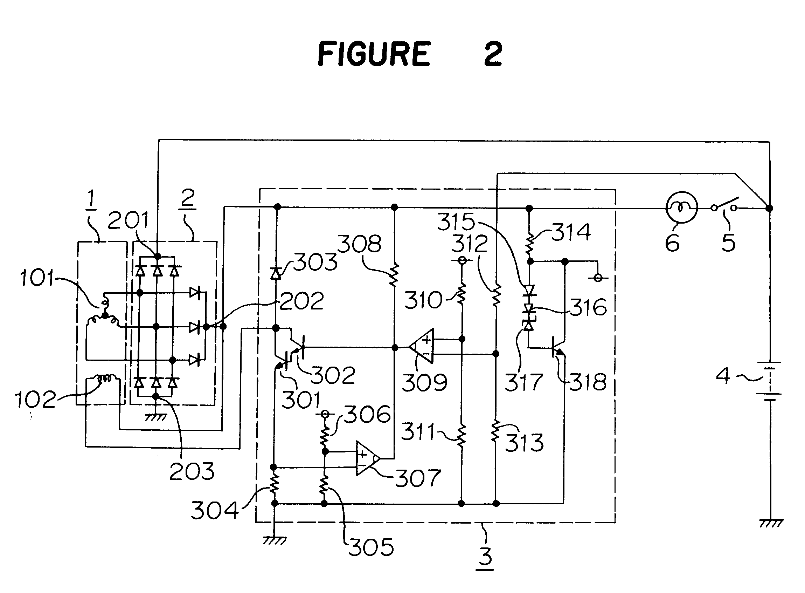

Figure 2 is a circuit diagram showing construction of a conventional control device for an alternating current generator of a vehicle. In Figure 2, a reference numeral 1 designates an alternating current generator having an armature coil 101 in star connection and a field coil 102, and 2, a rectifier composed of a three-phase full-wave bridge rectifier which is consisted of three sets of three series diodes connected to the armature coil 101, having a main rectified output terminal 201, and an auxiliary rectified output terminal 202 and a grounded output terminal 203 of the bridge rectifier.

A reference numeral 3 designates a voltage regulator which controls an output voltage of the alternating current generator to a predetermined value by controlling the field current flowing in the field coil 102, 4, a battery charged by a rectified output of the alternating current generator, 5, a key switch, and 6, a charge display lamp.

Numerals 301 and 302 designate transistors composed in darlington connection which interrupt the field current flowing in the field coil 102 of the alternating current generator 1, 303, a field discharge diode, and 304, a current detecting shunt resistance as a current detecting resistance, being inserted between the emitter of the transistor 301 and the ground, and having a positive temperature coefficient. Numerals 305 and 306 designate voltage dividing resistances for setting a reference voltage for comparison by dividing a reference voltage, having a positive temperature coefficient, 307, a comparator for comparing the divided voltage with a both terminal potential difference of the current detecting shunt resistance 304, and 308, a resistance for initial excitation of which one end is connected to the base of the transistor 302, and both output terminals of the comparator 307 and a comparator 309.

Numerals 310 and 311 designate resistances which divide a reference voltage, and 312 and 313, resistances which divide a voltage of the battery 4. The comparator 309 makes a comparison between these divided voltages. A numeral 314 designates a resistance, 315 and 316, diodes, 317, a zener diode, and 318, a transistor, which form a reference voltage based on the voltage of the battery 4.

One end of the field coil 102 of the alternating current generator 1 is connected to the collectors of the transistors 301 and 302, and an anode of the field discharge diode 303. The other end thereof is connected to the auxiliary rectified output terminal 202, the cathode of the field discharge diode 303, and the other end of the resistance 308, as well as to the positive pole of the battery 4 of which negative pole is grounded, through the charge display lamp 6 and the key switch 5. Furthermore, the main rectified current output terminal 201 of the rectifier 2 is connected to the positive pole of the battery 4.

Next, explanation will be given to the operation referring to Figure 2. When the key switch 5 is switched to ON, base currents flow to the transistors 302 and 301 from the battery 4 through the key switch 5, the charge display lamp 6, and the resistance 308, successively. An initial excitation current flows in the field coil 102 when the transistors 302 and 301 are switched to ON. When the alternating current generator 1 is driven by an engine, not shown, in this state, power generation starts.

When power is generated, an emitter current of the transistor 301 which is correlated with the field current flowing in the field coil 102, that is, approximately equal to the field current, flows in the current detecting shunt resistance 304. Therefore, the potential difference is generated between both ends of the current detecting shunt resistance 304. This potential difference is compared with a divided point potential of the voltage dividing resistances 306 and 305 by the comparator 307. When the potential difference becomes higher than the divided point potential by the increase of the field current, an output of the comparator 307 becomes "L" level, and the comparator 307 switches the transistors 302 and 301 to OFF, and cuts off the field current to restrict the field current to a predetermined value. When the transistors 301 and 302 are switched to OFF, the output of the comparator 307 is reversed to "H" level again, switches the transistors 302 and 301 to ON again, and flows the field current in the field coil 102.

By repeating the above operation, the field current is controlled so that it is restricted to a predetermined value, and the output voltage of the alternating current generator is controlled to a predetermined value. The alternating current signal generated by the alternating current generator 1, is rectified to a direct current by the rectifier 2, charges the battery 4 and activates the field coil 102.

Furthermore, when a charged voltage of the battery 4 becomes a predetermined value or more, the comparator 309 outputs the "L" level, and switches the transistors 302 and 301 to OFF. Furthermore, a circuit composed of the zener diode 317, the transistor 318 and the like, operates to maintain constant the reference voltage based on the voltage of the battery 4.

The conventional control device for an alternating current generator of a vehicle is constructed as above, and the current detecting shunt resistance 304 is provided with a low value of 10 mΩ to reduce a loss thereby. In a hybrid IC, generally, a conductor resistance of AG/Pd utilized as an electrode material is in use. On the other hand, the voltage dividing resistances 305 and 306 forming a reference voltage for comparison, have a positive temperature coefficient of about 200 PPM. Since the voltage dividing resistances 305 and 306 are provided on the top side and the bottom side of the voltage dividing point, which compensates an influence by temperature, the voltage detecting level is not varied with temperature. However, the conductive resistance utlized as the temperature detecting shunt resistance 304, has a positive temperature coefficient of about 500 PPM. Therefore, with increase of temperature, an operating current value for the "L" level of the comparator 3076 is decreased, and a negative temperature gradient is provided in a field current restricting value.

From EP-A-0 081 891 a control device for an alternating current generator of a vehicle having a storage battery is known. The storage battery is charged by a rectified output of said alternating current generator. The control device according to this document comprises a current detecting resistance wherein flows a current substantially equal to the current flowing in the field coil of the alternating current generator; voltage setting means for setting a reference voltage; and a comparator for comparing the potential difference across the current detecting resistance with a reference voltage. If an excessive current flows through the field coil, the field current is switched off.

From JP-A-61 039 607 a temperature compensating circuit is known which comprises an operational amplifier having its output connected to its negative input while the non-inversion input terminal of the operational amplifier is connected to a series connection of a variable resistor and a resistor. The output of the operational amplifier feeds a series connection of a plurality of diodes and a load resistor. The diodes provide for temperature commpensation of the output signal appearing across the resistor.

It is an object of the present invention to provide a control device for an alternating current generator of a vehicle capable of restricting the field current without being influenced by temperature.

According to the present invention this object is solved by a control device for an alternating current generator of a vehicle having a storage battery which is charged by a rectified output of said alternating current generator, said control device comprising:
- a current detecting resistance wherein flows a current substantially equal to the current flowing in the field coil of the alternating current generator;
- voltage setting means for setting a reference voltage;
- a comparator for comparing the potential difference across the current detecting resistance with the reference voltage;
   **characterized** in that said current detecting resistance has a predetermined temperature coefficient;
- said comparator regulates the field current of the alternating current generator based on the comparison result, the field current being cut off repeatedly in order to restrict the field current to a predetermined value; and
- the voltage setting means changes the reference voltage in accordance with temperature to compensate a temperature gradient of the potential difference across the current detecting resistance.

In the control device for the alternating current generator of a vehicle of this invention, the potential difference across the current detecting resistance is increased with the increase of temperature, and the reference voltage for comparison increases to compensate the increase of the potential difference by the voltage setting means, by which the field current is restricted to a constant field current value wherein the comparison of both voltages is not influenced by temperature.

In the drawings:
Figure 1 is a circuit diagram showing an embodiment of a control device for an alternating grenerator of a vehicle according to the present invention; and
Figure 2 is a circuit diagram showing a conventional device.

Explanation will be given to an embodiment of the present invention referring to the drawings as follows.

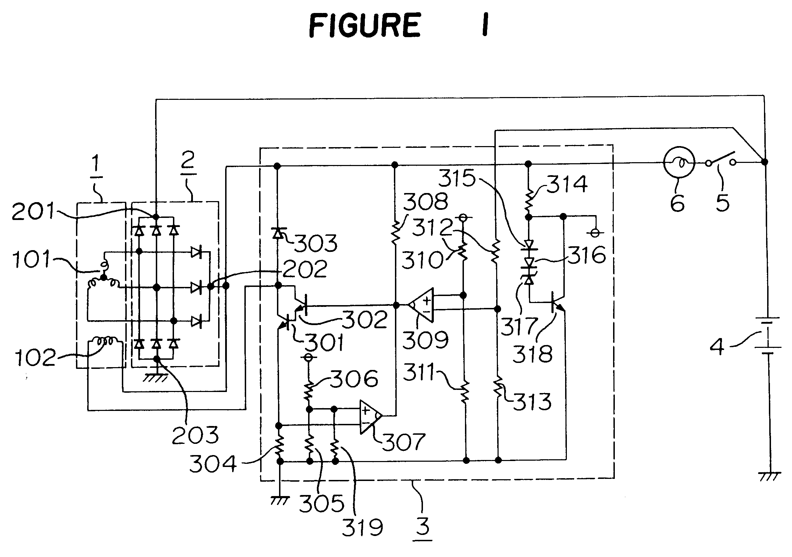

In Figure 1, portions being the same of the corresponding with those in the conventional example, are attached with the same notations as in Figure 2; 1 to 6, 101, 102, 201 to 203 and 301 to 318, and the explanation is omitted. In the voltage dividing resistances 305 and 306 for setting the reference voltage for comparison, a semiconductor resistance 319 having a positive temperature coefficient of about 2000 PPM, is connected in parallel to the voltage dividing resistance 305 on the lower potential side (A thick film resistance is used in this example). The other construction is the same with that in the conventional example, and the explanation is omitted.

Next, explanation will be given to the operation of the embodiment referring to Figure 1. However, explanation duplicated with the conventional example is omitted. The comparator 307 compares the potential difference across the current detecting shunt resistance 304, with the reference voltage formed by dividing the reference voltage by the voltage setting means composed of a parallel connected body of the voltage dividing resistance 305 and the semiconductor resistance 319 and the voltage dividing resistance 306, and outputs the comparison result to the base of the transistor 302.

At this occasion, when a constant current flows in the current detecting shunt resistance 304, the potential difference across the current detecting shunt resistance 304 increases with increase of temperature due to the temperature coefficient of about 500 PPM. Accordingly, a resistance value of a series parallel circuit of the voltage dividing resistances 306 and 305 having the temperature coefficient of about 200 PPM and the semiconductor resistance 319 having the temperature coefficient of about 2000 PPM is to be designed in optimum, to compensate the increase of the potential difference by the increase of the reference voltage. In this way, it becomes possible to compensate the negative temperature gradient of the field current restricting value due to the temperature coefficient of about 500 PPM of the current detecting shunt resistance 304.

As stated above, according to the present invention, the reference voltage is changed with temperature to compensate the temperature gradient of the potential difference across the current detecting resistance, and the field current of the alternating current generator is regulated based on the comparison result of the potential difference across the current detecting resistance and the reference voltage. Accordingly, the invention has an effect wherein the negative temperature gradient of the field current restricting value due to the positive temperature coefficient of the current detecting resistance, can be compensated.

## Claims

1. A control device for an alternating current generator (1) of a vehicle having a storage battery (4) which is charged by a rectified output of said alternating current generator (1), said control device comprising:
- a current detecting resistance (304) wherein flows a current substantially equal to the current flowing in the field coil (102) of the alternating current generator (1);
- voltage setting means (305, 306, 319) for setting a reference voltage;
- a comparator (307) for comparing the potential difference across the current detecting resistance with the reference voltage;
**characterized** in that
- said current detecting resistance (304) has a predetermined temperature coefficient;
- said comparator (307) regulates the field current of the alternating current generator (1) based on the comparison result, the field current being cut off repeatedly in order to restrict the field current to a predetermined value; and
- the voltage setting means (305, 306, 319) changes the reference voltage in accordance with temperature to compensate a temperature gradient of the potential difference across the current detecting resistance (304).

2. A control device according to claim 1,
**characterized** in that
- said current detecting resistance (319) utilizes Ag/Pd as electrode material having a positive temperature coefficient of about 500 PPM; and
- said voltage setting means includes a semiconductor reistance (319) having a positive temperature coefficient of about 2000 PPM.

## Patentansprüche

1. Steuervorrichtung für einen Wechselstromgenerator (1) eines Fahrzeugs mit einer Speicherbatterie (4), welche von einem gleichgerichteten Ausgang des Wechselstromgenerators (1) geladen wird, wobei die Steuervorrichtung umfaßt:
- einen Stromerfassungswiderstand (304), worin ein Strom fließt, der im wesentlichen gleich dem in der Feldspule (102) des Wechselstromgenerators (1) fließenden Strom ist;
- Spannungseinstelleinrichtungen (305, 306, 319) zum Einstellen einer Referenzspannung;
- einen Komparator (307) zum Vergleichen der Potentialdifferenz über dem Stromerfassungswiderstand mit der Referenzspannung;
dadurch **gekennzeichnet**, daß
- der Stromerfassungswiderstand (304) einen vorbestimmten Temperaturkoeffizienten hat;
- der Komparator (307) den Feldstrom des Wechselstromgenerators (1) auf der Grundlage des Vergleichsergebnisses regelt, wobei der Feldstrom wiederholt abgeschaltet wird, um den Feldstrom auf einen vorbestimmten Wert zu beschränken; und
- die Spannungseinstelleinrichtung (305, 306, 319) die Referenzspannung gemäß der Temperatur ändert, um einen Temperaturgradienten der Potentialdifferenz über dem Stromerfassungswiderstand (304) zu kompensieren.

2. Steuervorrichtung nach Anspruch 1, dadurch gekennzeichnet, daß
- der Stromerfassungswiderstand (319) Ag/Pd als Elektrodenmaterial mit einem positiven Temperaturkoeffizienten von ungefähr 500 PPM verwendet; und
- die Spannungseinstelleinrichtung einen Halbleiterwiderstand (319) mit einem positiven Temperaturkoeffizienten von ungefähr 2000 PPM einschließt.

## Revendications

1. Dispositif de contrôle pour un générateur de courant alternatif (1) d'un véhicule ayant un accumulateur (4) qui est chargé par une sortie redressée dudit générateur de courant alternatif (1), ledit dispositif de contrôle comprenant :
- une résistance de détection de courant (304) à travers laquelle circule un courant sensiblement égal au courant circulant dans l'inducteur (102) du générateur de courant alternatif (1) ;
-- des moyens de fixation de tension (305, 306, 319) pour fixer une tension de référence ;
-- un comparateur (307) pour comparer la différence de potentiel aux bornes de la résistance de détection de courant à la tension de référence ;
caractérisé en ce que
- ladite résistance de détection de courant (304) possède un coefficient de température prédéterminé ;
- ledit comparateur (307) régule le courant d'excitation du générateur de courant alternatif (1) sur la base du résultat de la comparaison, le courant d'excitation étant écrêté de façon répétitive afin de limiter le courant d'excitation à une valeur prédéterminée ; et
- les moyens de fixation de tension (305, 306, 319) modifient la tension de référence en fonction de la température afin de compenser un gradient de température de la différence de potentiel à travers la résistance de détection de courant (304).

2. Dispositif de contrôle selon la revendication 1, caractérisé en ce que :
- ladite résistance de détection de courant (319) utilise de l'Ag/Pd comme matériau d'électrode possédant un coefficient de température positif d'environ 500 PPM ; et
- lesdits moyens de fixation de tension comprennent une résistance à semi-conducteur (319) possédant un coefficient de température positif d'environ 2000 PPM.
